# EUROPEAN PATENT APPLICATION

(11) **EP 4 406 688 A1**
(43) Date of publication of application: **31.07.2024**
(21) Application number: 22872863.0
(22) Date of filing: 20.09.2022
(51) Int. Cl.: B23K 26/082, B23K 26/382, G02B 26/10

(54) **LASER PROCESSING METHOD**

(30) Priority: 22.09.2021 JP 2021154028
(71) Applicant: KAWASAKI JUKOGYO KABUSHIKI KAISHA, Kobe-shi, Hyogo 650-8670 (JP)
(72) Inventor: NAKAZAWA, Mutsuhiro, 673-8666 Akashi (JP)
(74) Representative: Wenzel Nemetzade Warthmüller Patentanwälte Part mbB
(86) International application number: PCT/JP2022/034866
(87) International publication number: WO 2023/048109

(57) **Abstract**

A laser processing method includes a preparation step and a processing step. In the preparation step, a workpiece (100), which is a processing object, is set at a processing position. In the processing step, the workpiece (100) set at the processing position is irradiated with pulse laser that has been emitted from a processing head (13) and has passed through an optical scanning device, to form plural holes in the workpiece (100). The optical scanning device scans with the pulse laser, so that a phenomenon in which a position of irradiation with the pulse laser sequentially changes from an initial position to a terminal position at a scanning speed and then returns to the initial position is periodically repeated. In the processing step, a position of irradiating the workpiece with the pulse laser is changed in a direction opposite to scanning with the pulse laser by the optical scanning device and at a speed substantially equal to a speed of the scanning with the pulse laser by the optical scanning device, whereby substantially the same portion of the workpiece (100) is irradiated with the pulse laser corresponding to one period.

## Description

### Technical Field

The present invention primarily relates to a method for performing a hole drilling process on a workpiece by using laser.

### Background Art

Patent Literature 1 (PTL 1) discloses a laser processing method for forming a number of through holes in a thin plate. In this laser processing method, the thin plate is would on a cylindrical drum. The drum has an opening portion along its circumferential direction. The thin plate is irradiated with pulse laser emitted from the inside of the drum along the opening portion, so that a number of through holes are formed in the thin plate.

### Citation List

### Patent Literature

PTL 1: Japanese Patent No. 6607649

### Summary of Invention

### Technical Problem

The laser processing method according to PTL 1 is on the assumption that through holes are formed in a workpiece (thin plate) in a single laser irradiation. Depending on types of workpieces, however, the same portion needs to be irradiated with more than once in order to form through holes. In such a case, a processing head and a workpiece are stopped and through holes are formed, and then the processing head or the workpiece is moved to change a portion to be irradiated with laser. In this method, the effective laser irradiation rate is lowered, because laser generated during the movement of the processing head or the workpiece is wasted.

The present invention has been made in view of the circumstances described above, and aims primarily to provide a laser processing method for forming plural through holes by irradiating the same portion with laser more than once in such a manner that a high effective laser irradiation rate can be obtained.

### Solution to Problem

The foregoing has described problems to be solved by the present invention. The following will describe solutions to the problems and advantageous effects thereof.

An aspect of the present invention provides a laser processing method as follows. A laser processing method includes a preparation step and a processing step. In the preparation step, a workpiece, which is a processing object, is set at a processing position. In the processing step, the workpiece set at the processing position is irradiated with pulse laser that has been emitted from a processing head and has passed through an optical scanning device, to form plural holes in the workpiece. The optical scanning device scans with the pulse laser, so that a phenomenon in which a position of irradiation with the pulse laser sequentially changes from an initial position to a terminal position at a scanning speed and then returns to the initial position is periodically repeated. In the processing step, a position of irradiating the workpiece with the pulse laser is changed in a direction opposite to scanning with pulse laser by the optical scanning device and at a speed substantially equal to a speed of the scanning with pulse laser by the optical scanning device such that a position of the pulse laser relative to the workpiece remains unchanged during irradiation with the pulse laser corresponding to one period, whereby substantially the same portion of the workpiece is irradiated with the pulse laser corresponding to one period.

Thus, substantially the same portion of the workpiece is irradiated with the pulse laser corresponding to one period. This can provide a higher effective laser irradiation rate, as compared to a method in which the processing head and the workpiece are stopped while holes are formed in the workpiece.

### Advantageous Effect of Invention

The present invention can form plural through holes by irradiating the same portion with laser more than once in such a manner that a high effective laser irradiation rate can be obtained.

### Brief Description of Drawings

[FIG. 1] A perspective view of a laser processing apparatus according to first embodiment.
[FIG. 2] A first side view of an optical scanning device
[FIG. 3] A second side view of the optical scanning device
[FIG. 4] A diagram illustrating laser changing its path by passing through a light-transmitting member
[FIG. 5] Side views illustrating scanning with laser light by an optical scanning device
[FIG. 6] A diagram showing a flow of hole drilling performed by irradiating the same portion with laser
[FIG. 7] A first side view of an optical scanning device according to second embodiment
[FIG. 8] Perspective views for the explanation of a treatment for processing a workpiece with a laser processing apparatus according to the second embodiment

### Description of Embodiments

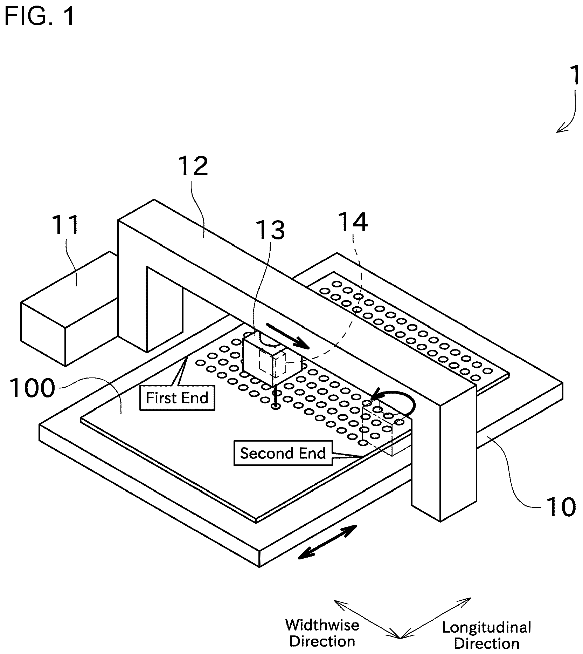

The following will describe, with reference to the drawings, embodiments of the present invention. First, referring to FIG. 1, a configuration of a laser processing apparatus 1 will be described. The laser processing apparatus 1 is used to form plural holes in a workpiece 100.

The workpiece 100 of this embodiment is a member used as an electrode of a lithium ion battery. The shape, material, and application of the workpiece 100 are not limited to this, however, and the laser processing apparatus 1 can be used for various workpieces 100 that need successive formation of plural holes (through holes or non-through holes).

As shown in FIG. 1, the laser processing apparatus 1 includes a moving part 10, a laser generator 11, a support member 12, and a processing head 13.

The moving part 10 is a table configured to move about a single axis. Placed on the moving part 10 is the workpiece 100. The moving part 10 moves the workpiece 100 placed thereon, in the longitudinal direction of the workpiece 100.

The laser generator 11 generates, by pulse oscillation, pulse laser at short time intervals. Although the time interval of the pulse laser is not particularly limited, the laser generator 11 generates pulse laser at short time intervals of the order of nanoseconds, picoseconds, femtoseconds, or the like, for example. In the following description, the "pulse laser" generated by the laser generator 11 is simply referred to as "laser."

The support member 12 includes a movable mechanism positioned above the workpiece 100. Attached to the movable mechanism is the processing head 13. An electric motor (not shown) operates the movable mechanism, to allow the processing head 13 to move in the widthwise direction of the workpiece 100. Disposed inside the support member 12 are plural optical components (such as a mirror or a prism) for guiding laser light generated by the laser generator 11 to the processing head 13. Instead of the configuration having the plural optical components, optical fibers may be used to guide laser from the laser generator 11 to the processing head 13.

The processing head 13 irradiates the workpiece 100 with laser that has been generated by the laser generator 11 and has passed through the support member 12. As shown in FIG. 1, the processing head 13 is rotatable about the vertical direction.

While the processing head 13 irradiates the workpiece 100 with laser, the processing head 13 moves from a first end to a second end of the workpiece 100 in the widthwise direction of the workpiece 100 with the workpiece 100 stopped. Consequently, through holes are successively formed in the workpiece 100.

After forming the through holes up to the second end in the widthwise direction of the workpiece 100, the processing head 13 turns by 180 degrees (inverted) about the vertical direction axis as the rotation center. While the direction of the processing head 13 is being inverted, the moving part 10 moves by a predetermined distance (specifically, by a length corresponding to the interval of through holes) in the longitudinal direction of the workpiece 100, and then stops. Then, the processing head 13 forms through holes in the workpiece 100 while moving from the second end to the first end of the workpiece 100 in the widthwise direction of the workpiece 100. By repeating this treatment, the laser processing apparatus 1 forms plural through holes in the workpiece 100.

A moving direction of the processing head 13 is not limited to the widthwise direction of the workpiece 100, and may be the longitudinal direction of the workpiece 100. The processing head 13 may be configured to be capable of two-axis movements (a movement in the widthwise direction and a movement in the longitudinal direction). In such a configuration, the moving part 10 may be omitted. Alternatively, it may be possible that the moving part 10 is configured to be capable of two-axis movements with omission of a movable mechanism for moving the processing head 13.

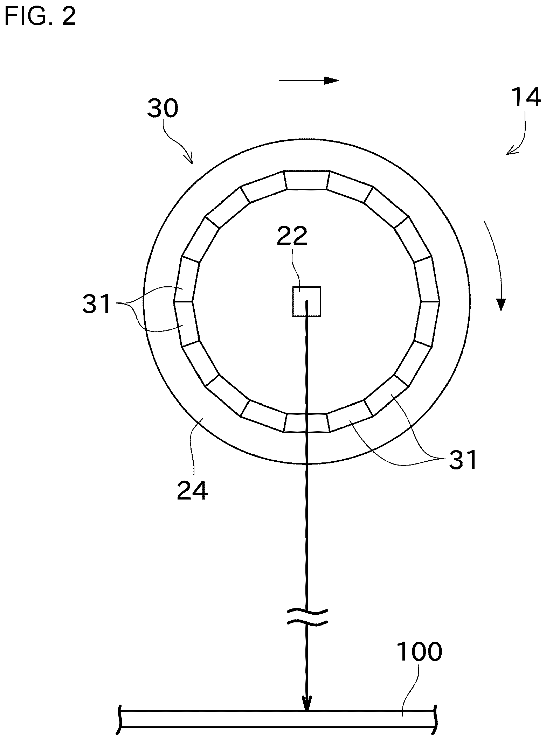

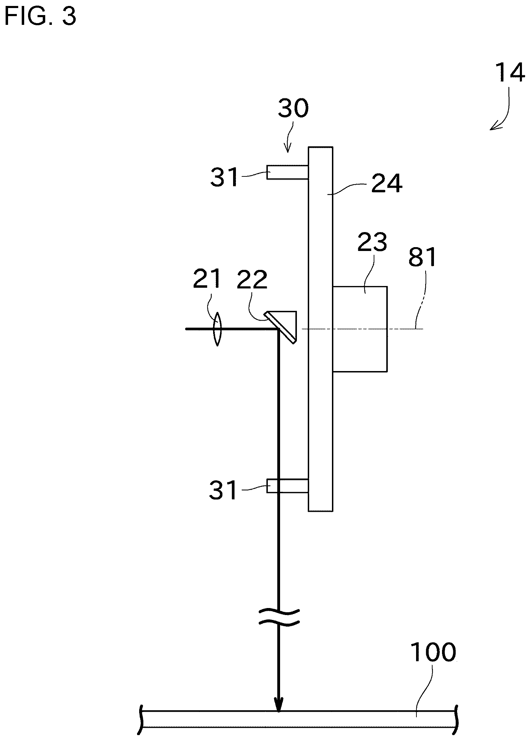

Disposed inside the processing head 13 is an optical scanning device 14. The optical scanning device 14 scans with laser generated by the laser generator 11, so that the laser is radiated to the workpiece 100. As shown in FIG. 2 and FIG. 3, the optical scanning device 14 includes a light condensing member 21, a reflecting member 22, an electric motor 23, a rotary table 24, and a transmission optical system 30.

The light condensing member 21 is a condensing lens for condensing laser. The light condensing member 21 is not limited to a condensing lens, but may be a parabolic mirror, for example. The reflecting member 22 is a mirror or a prism configured to reflect laser. Laser condensed by the light condensing member 21 is reflected by the reflecting member 22, so that a traveling direction of the laser is changed. The laser reflected by the reflecting member 22 travels toward the transmission optical system 30. A detailed description of a configuration from the laser generator 11 to the reflecting member 22 is omitted.

The electric motor 23 generates a rotational driving force. The rotational driving force generated by the electric motor 23 is transferred to the rotary table 24. As a result, the rotary table 24 rotates about a rotation axis 81. Here, the light condensing member 21 and the reflecting member 22 are capable of rotating relative to the rotary table 24, so that the light condensing member 21 and the reflecting member 22 do not rotate even when the rotary table 24 rotates.

The rotary table 24 is provided with the transmission optical system 30. As the rotary table 24 rotates, the transmission optical system 30 rotates integrally with the rotary table 24, too. The transmission optical system 30 is made up of plural light-transmitting members 31, which allow laser to pass therethrough. The light-transmitting members 31, each of which is a plate-like member having a fixed thickness, are arranged so as to form a polygon (in this embodiment, a regular octadecagon).

When laser passes through the light-transmitting member 31, the laser changes (offsets) its path. By using this principle, the laser processing apparatus 1 scans with laser.

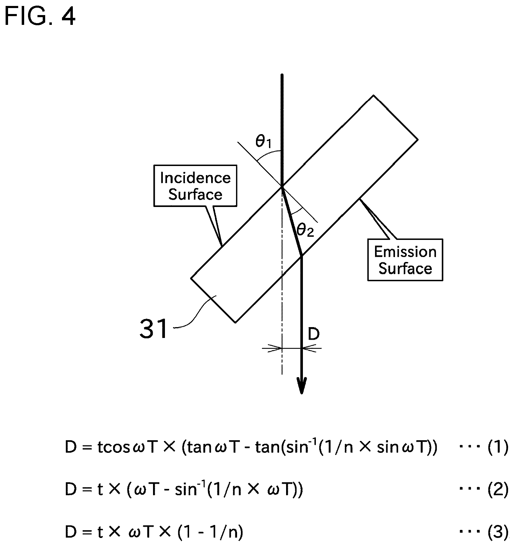

Now, referring to FIG. 4, a principle in which a laser path changes will be described. The light-transmitting member 31 has an incidence surface on which laser is incident, and an emission surface from which laser is emitted. The incidence surface and the emission surface of the light-transmitting member 31 are parallel. When the incidence surface and a reflection surface of the light-transmitting member 31 are orthogonal to laser, the laser path does not change, while when the incidence surface and the reflection surface of the light-transmitting member 31 are not orthogonal to laser, the laser path changes.

As laser is incident on the light-transmitting member 31, the laser is refracted. To be specific, an angle-of-refraction θ2 takes a value different from an angle-of-incidence θ1. The relationship between the angle-of-incidence θ1 and the angle-of-refraction θ2 depends on the ratio between an index of refraction in the air and an index of refraction in the light-transmitting member 31. As laser is emitted from the light-transmitting member 31 to the outside, the laser is refracted, too. Since the incidence surface and the emission surface of the light-transmitting member 31 are parallel, a direction of laser incident on the light-transmitting member 31 is parallel to a direction of laser emitted from the light-transmitting member 31. A position of the laser incident on the light-transmitting member 31 is different, by a distance D, from a position of the laser emitted from the light-transmitting member 31.

The distance D depends on: the angle of the light-transmitting member 31 relative to the laser; the thickness of the light-transmitting member 31; and the ratio between the index of refraction in the air and the index of refraction in the light-transmitting member 31. In this embodiment, the thickness of the light-transmitting member 31 and the ratio between the indices of refraction are fixed, and therefore the distance D changes in accordance with the angle of the light-transmitting member 31 relative to the laser.

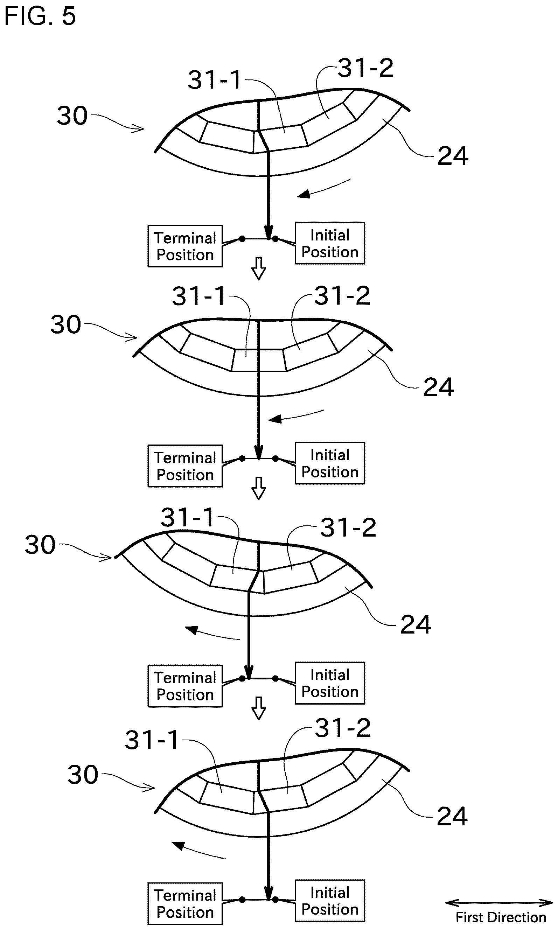

The light-transmitting member 31 of this embodiment is fixed to the rotary table 24. Accordingly, rotating the rotary table 24 can rotate the light-transmitting member 31. When laser passes through the light-transmitting member 31, as shown in FIG. 5, the angle of the light-transmitting member 31 relative to the laser changes in accordance with a rotation phase of the light-transmitting member 31 (transmission optical system 30). Consequently, based on the principle mentioned above, the foregoing distance D changes in accordance with the rotation phase of the light-transmitting member 31 (transmission optical system 30). Thus, by radiating laser while rotating the transmission optical system 30, scanning with the laser is performed.

Hereinafter, the direction in which laser scans will be referred to as "first direction." To distinguish the plural light-transmitting members 31 from one another in the description, two adjacent light-transmitting members 31 may sometimes be referred to as the light-transmitting member 31-1 and the light-transmitting member 31-2. While laser is passing through one light-transmitting member 31 (for example, the light-transmitting member 31-1 shown in FIG. 5), the laser scans from "initial position" to "terminal position." Then, the light-transmitting member 31 through which laser passes is switched to the next light-transmitting member 31 (for example, the light-transmitting member 31-2 shown in FIG. 5), so that a laser irradiation position comes back to the "initial position."

Next, a description will be given about the fact that the speed (hereinafter, scanning speed) at which laser moves from the initial position to the terminal position is a substantially uniform speed. The angle-of-incidence θ1 after the elapse of T seconds is ωT, where ω represents a change in the angle-of-incidence θ1 over time (the speed at which the angle-of-incidence θ1 changes), provided that the initial value of θ1 is zero. With ωT and n, which is the index of refraction in the light-transmitting member 31, D is expressed as Formula (1) of FIG. 4. Formula (1) is a known formula derived from Snell's law and the formulas of plane figures.

Although FIG. 4 shows θ1 larger than the actual value for the purpose of clear illustration of D, the actual angle-of-incidence θ1 is 0 degrees or more and 10 degrees or less. That is, θ1 is small enough to establish approximate expressions of sinθ=tanθ=θ, and cosθ=1. By using these approximate expressions, Formula (1) is converted into Formula (2). Furthermore, by using an approximate expression of sin⁻¹x=x, Formula (2) is converted into Formula (3). In this embodiment, ω is a constant value, and n, which is a physical property value, is a constant, too. Accordingly, D is a linear function of T. Since scanning speed is a change in D over time, the scanning speed is a substantially uniform speed.

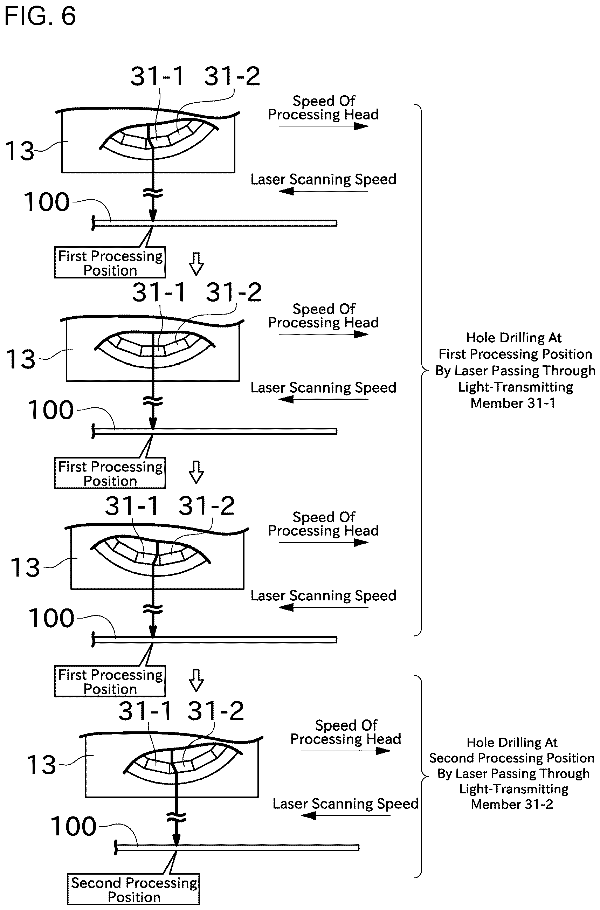

Referring to FIG. 6, a method for irradiating the same portion with laser more than once will be described.

Laser irradiation follows a preparation step in which the workpiece 100 is set at a processing position. The processing position is a position at which the workpiece 100 is set when the workpiece 100 is processed. In this embodiment, the moving part 10 corresponds to the processing position. Setting the workpiece 100 means placing or fixing the workpiece 100 so as to allow the workpiece 100 to be processed.

Then, a processing step is performed in which holes are formed in the workpiece 100 by using the laser processing apparatus 1. As described above, the scanning speed of laser having passed through the optical scanning device 14 is a substantially uniform speed. Thus, as shown in FIG. 6, if the processing head 13 is moved in the direction opposite to the laser at a speed substantially equal to the scanning speed of the laser, the laser scanning is canceled by the movement of the processing head 13, so that substantially the same portion of the workpiece 100 is continuously irradiated with the laser. Substantially the same portion is, in other words, practically the same portion, including a slight difference. While a laser beam is passing through a predetermined light-transmitting member 31 (the light-transmitting member 31-1), substantially the same portion (first processing position) is irradiated with laser. Accordingly, it is possible to form a hole in a workpiece 100 by radiating laser more than once, even though forming a hole in the workpiece 100 in a single laser irradiation is difficult. In this embodiment, the processing head 13 is moved relative to the workpiece 100, to change the position of pulse laser relative to the workpiece 100. Instead, the workpiece 100 may be moved relative to the processing head 13, to change the position of pulse laser relative to the workpiece 100.

Then, at a timing of state switching from the state where laser passes through the light-transmitting member 31-1 to the state where laser passes through the light-transmitting member 31-2, the laser irradiation position changes (switches from the terminal position to the initial position). As a result, the next processing position (second processing position) is continuously irradiated with laser.

In this manner, holes can be continuously formed in the workpiece 100 without stopping the processing head 13. As described above, the laser processing apparatus 1 performs processing while moving the processing head 13 from the first end to the second end of the workpiece 100 in the widthwise direction of the workpiece 100, and then inverts the direction of the processing head 13. As the direction of the processing head 13 is inverted, the direction of the optical scanning device 14 is inverted, and the direction of the laser scanning speed is inverted, too. Then, the laser processing apparatus 1 performs processing while moving the processing head 13 at a substantially uniform speed from the second end to the first end of the workpiece 100 in the widthwise direction of the workpiece 100.

Inverting the direction of the processing head 13 can reverse the moving direction of the processing head 13 and the direction of the laser scanning speed. Accordingly, in a way from the second end to the first end of the workpiece 100 in the widthwise direction of the workpiece 100, too, substantially the same portion can be irradiated with laser more than once, to form holes in the workpiece 100.

In this embodiment, it is not necessary to stop the processing head 13 while the processing head 13 is moving from the first end to the second end of the workpiece 100 in the widthwise direction of the workpiece 100. This can provide a higher effective laser irradiation rate, as compared to a method in which a processing head is stopped and moved in each formation of a hole.

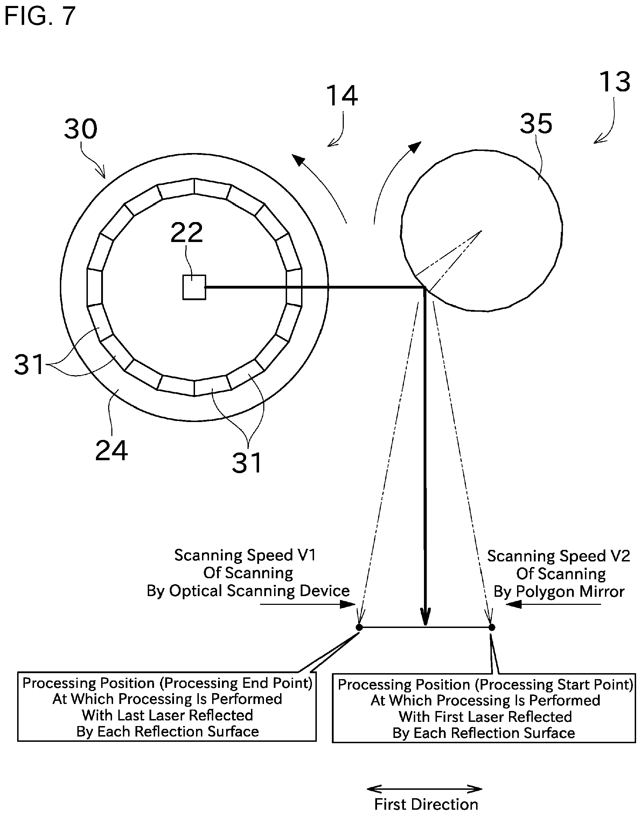

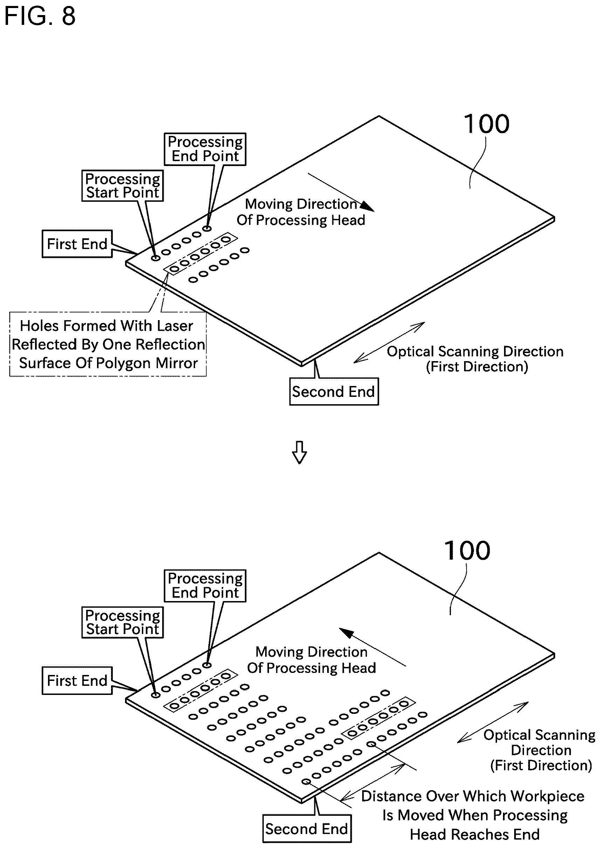

Next, a laser processing apparatus 1 according to second embodiment will be described with reference to FIG. 7 and FIG. 8.

In the second embodiment, a processing head 13 is configured to include an optical scanning device 14 and a polygon mirror 35. Laser having passed through the optical scanning device 14 is radiated in the horizontal direction, and reflected downward by the polygon mirror 35, to be radiated to the workpiece 100. The polygon mirror 35, which is in the shape of a polygon, has mirrors (reflection surfaces) disposed at positions corresponding to the sides of the polygon. The polygon mirror 35 is configured to be rotatable about a rotation axis, which is parallel to the center of rotation of the light-transmitting member 31. As the polygon mirror 35 rotates, which of the reflection surfaces reflects laser switches at predetermined periods.

In the first embodiment, the processing head 13 is moved in the direction opposite to scanning by the optical scanning device 14 and at a speed substantially equal to the speed of the scanning by the optical scanning device 14, so that substantially the same portion is irradiated with laser corresponding to one period. In the second embodiment, on the other hand, the polygon mirror 35 makes laser scan in the direction opposite to scanning by the optical scanning device 14 and at a speed substantially equal to the speed of the scanning by the optical scanning device 14, so that substantially the same portion is irradiated with laser corresponding to one period. That is, as shown in FIG. 7, V1=-V2 is established, where V1 represents the scanning speed at which the optical scanning device 14 scans over the workpiece 100, and V2 represents the scanning speed at which the polygon mirror 35 scans over the workpiece 100. Measurement of the speed V1 and the speed V2 can be implemented by, for example, stopping either one of the laser scanning by the optical scanning device 14 or the rotation of the polygon mirror 35.

While laser is being reflected by one reflection surface of the polygon mirror 35, the angle of the reflection surface relative to the laser gradually changes as the polygon mirror 35 rotates. Consequently, the traveling direction of the laser gradually changes. In other words, the polygon mirror 35 makes the laser scan. In a case of the polygon mirror 35 having a hexadecagonal shape for example, each face has a central angle of 22.5 degrees, and a scan angle of 45 degrees. Here, cos22.5° equals 0.923, which is approximate to 1, and thus the laser scanning by the polygon mirror 35 is at a substantially uniform speed. The number of sides of the polygon mirror 35 is not limited to sixteen. As long as the number of sides of the polygon mirror 35 is not less than sixteen, the laser scanning by the polygon mirror 35 is at a substantially uniform speed.

The rotation direction of the transmission optical system 30 and the rotation direction of the polygon mirror 35 are set such that the direction in which the optical scanning device 14 makes laser scan and the direction in which the polygon mirror 35 makes laser scan can be opposite to each other. More specifically, the rotation direction of the transmission optical system 30 and the rotation direction of the polygon mirror 35 are opposite to each other. Moreover, the rotation speed of the transmission optical system 30 and the rotation speed of the polygon mirror 35 are set such that the speed at which the workpiece 100 is scanned with laser by the optical scanning device 14 and the speed at which the workpiece 100 is scanned with laser by the polygon mirror 35 can be substantially equal to each other. As a result, the laser scanning by the optical scanning device 14 and the laser scanning by the polygon mirror 35 cancel each other, so that substantially the same portion of the workpiece 100 is irradiated with laser while the laser is passing through one light-transmitting member 31.

In addition, a light-transmitting member 31 through which laser passes is switched, so that the laser irradiation position returns from the terminal position to the initial position, as shown in the first embodiment. Consequently, the position of laser radiated to the workpiece 100 changes, too. Accordingly, while laser is being reflected by one reflection surface of the polygon mirror 35, the laser irradiation position changes in the first direction each time the light-transmitting member 31 through which laser passes is switched. This is how the laser scans in the first direction in the second embodiment. Then, which of the reflection surfaces of the polygon mirror 35 reflects the laser is switched, so that the laser irradiation position returns from a processing end point (FIG. 7) to a processing start point (FIG. 7) in the first direction.

The processing head 13 of the second embodiment moves in the direction orthogonal to the drawing sheet of FIG. 7. That is, in the second embodiment, the moving direction of the processing head 13 is orthogonal to the first direction (the optical scanning direction). It therefore is possible to form holes in two directions (the moving direction of the processing head 13 and the optical scanning direction), just by moving the processing head 13 from the first end to the second end of the workpiece 100, as shown in FIG. 8. After the processing head 13 reaches the second end of the workpiece 100, the workpiece 100 is moved in the optical scanning direction. The distance of this movement is preferably equal to a length over which the processing head 13 performs optical scanning. Then, the processing head 13 is moved from the second end to the first end. The processing head 13 need not be inverted. By repeating this operation, holes can be formed over the entire surface of the workpiece 100.

As thus far described, in the foregoing embodiments, hole drilling is performed on the workpiece 100 by the following laser processing method. The laser processing method according to the first embodiment includes the preparation step and the processing step. In the preparation step, the workpiece 100, which is a processing object, is set at the processing position. In the processing step, the workpiece 100 set at the processing position is irradiated with pulse laser that has been emitted from the processing head 13 and has passed through the optical scanning device 14, to form plural holes in the workpiece 100. The optical scanning device 14 scans with the pulse laser, so that a phenomenon in which the position of irradiation with the pulse laser sequentially changes from the initial position to the terminal position at the scanning speed and then returns to the initial position is periodically repeated. In the processing step, the position of irradiating the workpiece 100 with the pulse laser is changed in the direction opposite to the scanning with the pulse laser by the optical scanning device and at a speed substantially equal to a speed of the scanning with the pulse laser by the optical scanning device such that the position of the pulse laser relative to the workpiece 100 remains unchanged during irradiation with the pulse laser corresponding to one period, whereby substantially the same portion of the workpiece 100 is irradiated with the pulse laser corresponding to one period.

Thus, substantially the same portion of the workpiece 100 is irradiated with the pulse laser corresponding to one period. This can provide a higher effective laser irradiation rate, as compared to a method in which the processing head 13 and the workpiece 100 are stopped while holes are formed in the workpiece 100.

In the foregoing embodiments, the optical scanning device 14 includes the transmission optical system 30 having the plural light-transmitting members 31, each of which allows pulse laser to pass therethrough. As the transmission optical system 30 rotates, the light-transmitting member 31 through which the pulse laser passes is switched. While the pulse laser is passing through one of the light-transmitting members 31, the position of irradiation with the pulse laser changes from the initial position to the terminal position at or under the substantially fixed scanning speed in accordance with the rotation phase of the optical scanning device 14.

Accordingly, the optical scanning device configured such that the position of irradiation with the pulse laser sequentially changes from the initial position to the terminal position and then returns to the initial position can be achieved with a simple structure.

In the processing step of the first embodiment, the workpiece 100 or the processing head 13 is moved in such a direction as to cancel scanning with the pulse laser by the optical scanning device 14 and at a speed substantially equal to a speed of the scanning speed, whereby substantially the same portion of the workpiece 100 is irradiated with the pulse laser corresponding to one period.

In the processing step of the second embodiment, the rotating polygon mirror 35 is irradiated with the pulse laser, and the pulse laser reflected by the polygon mirror 35 is used to form plural holes in the workpiece 100. In the processing step, the direction in which the optical scanning device 14 scans with the pulse laser and the direction in which the polygon mirror 35 scans with the pulse laser are opposite to each other, and the speed at which the optical scanning device 14 scans with the pulse laser and the speed at which the polygon mirror 35 scans with the pulse laser are substantially equal to each other, whereby substantially the same portion of the workpiece 100 is irradiated with the pulse laser corresponding to one period.

While some preferred embodiments of the present invention have been described above, the configurations described above may be modified, for example, as follows.

The structure for scanning with laser in the first direction is just an example, and an optical scanning device having a structure different from the above-described one may be adopted.

The laser processing apparatus 1 according to the foregoing embodiments performs hole drilling in two directions (the widthwise direction and the longitudinal direction) on the workpiece 100. Alternatively, the laser processing apparatus 1 may be configured to perform hole drilling in one direction on the workpiece 100.

## Claims

1. A laser processing method comprising:
a preparation step of setting a workpiece, which is a processing object, at a processing position; and
a processing step of irradiating the workpiece set at the processing position with pulse laser that has been emitted from a processing head and has passed through an optical scanning device, to form plural holes in the workpiece, wherein
the optical scanning device scans with the pulse laser, so that a phenomenon in which a position of irradiation with the pulse laser sequentially changes from an initial position to a terminal position at a scanning speed and then returns to the initial position is periodically repeated, and
in the processing step, a position of irradiating the workpiece with the pulse laser is changed in a direction opposite to scanning with the pulse laser by the optical scanning device and at a speed substantially equal to a speed of the scanning with the pulse laser by the optical scanning device such that a position of the pulse laser relative to the workpiece remains unchanged during irradiation with the pulse laser corresponding to one period, whereby substantially the same portion of the workpiece is irradiated with the pulse laser corresponding to one period.

2. The laser processing method according to claim 1, wherein
the optical scanning device includes a transmission optical system having plural light-transmitting members each allowing the pulse laser to pass therethrough,
as the transmission optical system rotates, the light-transmitting member through which the pulse laser passes is switched, and
while the pulse laser is passing through one of the light-transmitting members, the position of irradiation with the pulse laser changes from an initial position to a terminal position at or under a substantially fixed scanning speed in accordance with a rotation phase of the optical scanning device.

3. The laser processing method according to claim 1 or 2, wherein
in the processing step, the workpiece or the processing head is moved in such a direction as to cancel scanning with the pulse laser by the optical scanning device and at a speed substantially equal to a speed of the scanning speed, whereby substantially the same portion of the workpiece is irradiated with the pulse laser corresponding to one period.

4. The laser processing method according to claim 1 or 2, wherein
in the processing step, a rotating polygon mirror is irradiated with the pulse laser, and the pulse laser reflected by the polygon mirror is used to form plural holes in the workpiece, and
in the processing step, a direction in which the optical scanning device scans with the pulse laser and a direction in which the polygon mirror scans with the pulse laser are opposite to each other, and a speed at which the optical scanning device scans with the pulse laser and a speed at which the polygon mirror scans with the pulse laser are substantially equal to each other, whereby substantially the same portion of the workpiece is irradiated with the pulse laser corresponding to one period.
